(19)

Europäisches
Patentamt
European
Patent Office
Office européen
des brevets

(11) **EP 3 500 054 A1**

(12) **EUROPEAN PATENT APPLICATION**
published in accordance with Art. 153(4) EPC

(43) Date of publication:
**19.06.2019 Bulletin 2019/25**

(51) Int Cl.:
**H04W 76/16** (2018.01)    **H04W 8/24** (2009.01)

(21) Application number: **18829712.1**

(22) Date of filing: **01.10.2018**

(86) International application number:
**PCT/KR2018/011613**

(87) International publication number:
**WO 2019/070091 (11.04.2019 Gazette 2019/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.10.2017 US 201762566542 P
11.10.2017 US 201762571172 P**

(71) Applicant: **LG Electronics Inc.**
**Yeongdeungpo-gu**
**SEOUL,**
**07336 (KR)**

(72) Inventors:
 • **JUNG, Manyoung**
  **Seoul 06772 (KR)**
 • **YANG, Yoonoh**
  **Seoul 06772 (KR)**
 • **LEE, Sangwook**
  **Seoul 06772 (KR)**
 • **LIM, Suhwan**
  **Seoul 06772 (KR)**
 • **HWANG, Jinyup**
  **Seoul 06772 (KR)**

(74) Representative: **Mooser, Sebastian Thomas**
**Wuesthoff & Wuesthoff**
**Patentanwälte PartG mbB**
**Schweigerstraße 2**
**81541 München (DE)**

(54) **METHOD AND USER EQUIPMENT FOR UPLINK TRANSMISSION IN DUAL-CONNECTIVITY BETWEEN LTE AND NT**

(57)   One disclosure of this specification provides a method for user equipment (UE) to perform uplink (UL) transmission. The method may include transmitting UE capability information to a serving cell. The UE capability information may include information about a switching type between long term evolution (LTE) UL transmission and new radio access technology (NR). The information about the switching type may indicate whether the UE supports a first switching type or supports a second switching type faster than the first switching type.

FIG. 9

**EP 3 500 054 A1**

Description

## BACKGROUND OF THE INVENTION

Field of the invention

The present invention relates to mobile communication.

Related Art

Thanks to a success of Long Term Evolution (LTE) and LTE-Advanced (LTE-A) for 4G mobile communication, interest in next generation, namely 5-generation (so called 5G) mobile communication has increased and research has also been underway.

In 5G NR, a physical broadcast channel (PBCH) and a synchronization signal (including a PSS and an SSS) including information required for the UE to perform an initial access, that is, an MIB are defined as an SS block. In addition, a plurality of SS blocks may be defined as an SS burst and a plurality of SS bursts may be collected and defined as an SS burst set. Each SS block is assumed to be beamformed in a specific direction and several SS blocks in the SS burst set are designed to support terminals in different directions.

Meanwhile, considering limited frequency resources, a band for existing LTE/LTE-A may be shared for NR. As such, one band may be shared between the LTE / LTE-A and the NR. However, in a situation where one UE alternately performs LTE/LTE-A based uplink signal transmission and NR based uplink signal transmission through one band, it is difficult for a base station to accurately grasp a reception timing of an uplink signal.

## SUMMARY OF THE INVENTION

Accordingly, a disclosure of this specification has been made in an effort to solve the aforementioned problem.

Accordingly, in an effort to solve the aforementioned problem, a disclosure of this specification provides a method for performing an uplink (UL) transmission. The method may be performed by a user equipment (UE). The method may comprise: transmitting a UE capability information to a serving cell. The UE capability information may include information related to a switching type between a long term evolution (LTE) UL transmission and a new radio access technology (NR) UL transmission. The information related to the switching type may indicate whether the UE supports a first switching type or a second switching type, which is faster than the first switching type.

The UE may support a dual connectivity with a LTE and a NR.

The dual connectivity may be configured to share an UL between the LTE and the NR.

The method may further comprise: determining one of the first switching type and the second switching type.

The method may further comprise: setting a value for indicating the determined switching type into the UE capability information.

The method may further comprise: receiving a UE capability enquiry message.

The method may further comprise: receiving a signal including information related to a 7.5 kHz shift for a channel raster; and using the 7.5 kHz shift for the channel raster.

The channel raster may define a plurality of reference frequencies used to identify positions of channels.

Accordingly, in an effort to solve the aforementioned problem, a disclosure of this specification provides a user equipment (UE) for performing an uplink (UL) transmission. The UE may comprise: a transceiver; and a processor configured to control the transceiver. The processor may transmit, via the transceiver, a UE capability information to a serving cell. The UE capability information may include information related to a switching type between a long term evolution (LTE) UL transmission and a new radio access technology (NR) UL transmission. The information related to the switching type may indicate whether the UE supports a first switching type or a second switching type, which is faster than the first switching type.

According to the disclosure of the present invention, the problem of the conventional technology described above may be solved.

## BRIEF DESCRIPTION OF THE DRAWINGS

FIG. 1 is a wireless communication system.
FIG. 2 illustrates a structure of a radio frame according to FDD in 3GPP LTE.
FIG. 3 illustrates a cell detection and measurement procedure.

FIGS. 4A to 4C are exemplary diagrams illustrating an exemplary architecture for a service for next-generation mobile communication.

FIG. 5 illustrates an example of a subframe type in NR.

FIG. 6 is an exemplary diagram illustrating an example of an SS block in the NR.

FIG. 7 is an exemplary diagram illustrating an example of beam sweeping in the NR.

FIG. 8 illustrates an example in which LTE/LTE-A and the NR share an uplink in an arbitrary band.

FIG. 9 is a flowchart illustrating a method according to a second disclosure of the present invention.

FIG. 10 is a block diagram illustrating a wireless device and a base station in which a disclosure of this specification is implemented.

FIG. 11 is a detailed block diagram of a transceiver of the wireless device illustrated in FIG. 10.

## DESCRIPTION OF EXEMPLARY EMBODIMENTS

Hereinafter, based on 3rd Generation Partnership Project (3GPP) long term evolution (LTE) or 3GPP LTE-advanced (LTE-A), the present invention will be applied. This is just an example, and the present invention may be applied to various wireless communication systems. Hereinafter, LTE includes LTE and/or LTE-A.

The technical terms used herein are used to merely describe specific embodiments and should not be construed as limiting the present invention. Further, the technical terms used herein should be, unless defined otherwise, interpreted as having meanings generally understood by those skilled in the art but not too broadly or too narrowly. Further, the technical terms used herein, which are determined not to exactly represent the spirit of the invention, should be replaced by or understood by such technical terms as being able to be exactly understood by those skilled in the art. Further, the general terms used herein should be interpreted in the context as defined in the dictionary, but not in an excessively narrowed manner.

The expression of the singular number in the present invention includes the meaning of the plural number unless the meaning of the singular number is definitely different from that of the plural number in the context. In the following description, the term 'include' or 'have' may represent the existence of a feature, a number, a step, an operation, a component, a part or the combination thereof described in the present invention, and may not exclude the existence or addition of another feature, another number, another step, another operation, another component, another part or the combination thereof.

The terms 'first' and 'second' are used for the purpose of explanation about various components, and the components are not limited to the terms 'first' and 'second'. The terms 'first' and 'second' are only used to distinguish one component from another component. For example, a first component may be named as a second component without deviating from the scope of the present invention.

It will be understood that when an element or layer is referred to as being "connected to" or "coupled to" another element or layer, it can be directly connected or coupled to the other element or layer or intervening elements or layers may be present. In contrast, when an element is referred to as being "directly connected to" or "directly coupled to" another element or layer, there are no intervening elements or layers present.

Hereinafter, exemplary embodiments of the present invention will be described in greater detail with reference to the accompanying drawings. In describing the present invention, for ease of understanding, the same reference numerals are used to denote the same components throughout the drawings, and repetitive description on the same components will be omitted. Detailed description on well-known arts which are determined to make the gist of the invention unclear will be omitted. The accompanying drawings are provided to merely make the spirit of the invention readily understood, but not should be intended to be limiting of the invention. It should be understood that the spirit of the invention may be extended to its modifications, replacements or equivalents in addition to what is shown in the drawings.

As used herein, 'base station' generally refers to a fixed station that communicates with a wireless device and may be denoted by other terms such as eNB (evolved-NodeB), BTS (base transceiver system), or access point.

As used herein, 'user equipment (UE)' may be stationary or mobile, and may be denoted by other terms such as device, wireless device, terminal, MS (mobile station), UT (user terminal), SS (subscriber station), MT (mobile terminal) and etc.

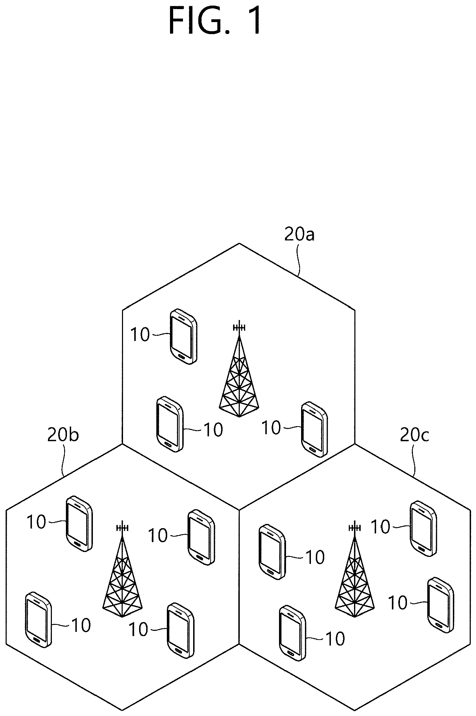

FIG. 1 illustrates a wireless communication system.

As seen with reference to FIG. 1, the wireless communication system includes at least one base station (BS) 20. Each base station 20 provides a communication service to specific geographical areas (generally, referred to as cells) 20a, 20b, and 20c. The cell can be further divided into a plurality of areas (sectors).

The UE generally belongs to one cell and the cell to which the UE belong is referred to as a serving cell. A base station that provides the communication service to the serving cell is referred to as a serving BS. Since the wireless communication system is a cellular system, another cell that neighbors to the serving cell is present. Another cell which neighbors to the serving cell is referred to a neighbor cell. A base station that provides the communication service to the neighbor cell is referred to as a neighbor BS. The serving cell and the neighbor cell are relatively decided based on the UE.

Hereinafter, a downlink means communication from the base station 20 to the UEl 10 and an uplink means communication from the UE 10 to the base station 20. In the downlink, a transmitter may be a part of the base station 20 and a receiver may be a part of the UE 10. In the uplink, the transmitter may be a part of the UE 10 and the receiver may be a part of the base station 20.

Meanwhile, the wireless communication system may be generally divided into a frequency division duplex (FDD) type and a time division duplex (TDD) type. According to the FDD type, uplink transmission and downlink transmission are achieved while occupying different frequency bands. According to the TDD type, the uplink transmission and the downlink transmission are achieved at different time while occupying the same frequency band. A channel response of the TDD type is substantially reciprocal. This means that a downlink channel response and an uplink channel response are approximately the same as each other in a given frequency area. Accordingly, in the TDD based wireless communication system, the downlink channel response may be acquired from the uplink channel response. In the TDD type, since an entire frequency band is time-divided in the uplink transmission and the downlink transmission, the downlink transmission by the base station and the uplink transmission by the terminal may not be performed simultaneously. In the TDD system in which the uplink transmission and the downlink transmission are divided by the unit of a subframe, the uplink transmission and the downlink transmission are performed in different subframes.

Hereinafter, the LTE system will be described in detail.

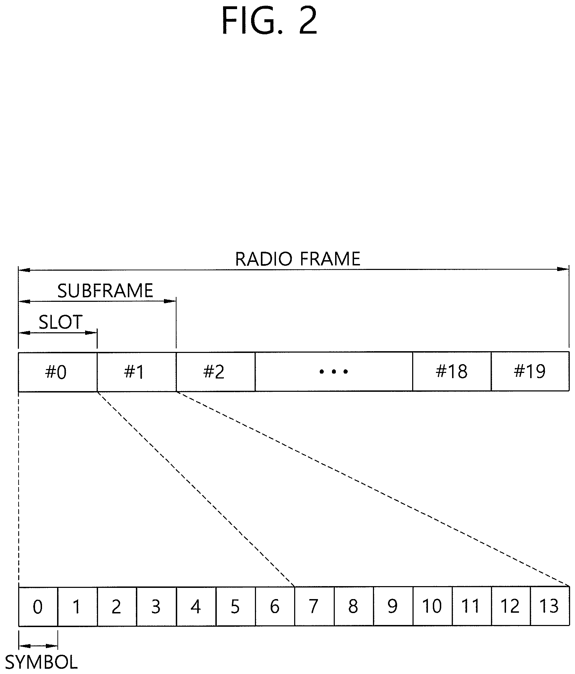

FIG. 2 shows a downlink radio frame structure according to FDD of 3rd generation partnership project (3GPP) long term evolution (LTE).

The radio frame of FIG. 2 may be found in the section 5 of 3GPP TS 36.211 V10.4.0 (2011-12) "Evolved Universal Terrestrial Radio Access (E-UTRA); Physical Channels and Modulation (Release 10)".

The radio frame includes 10 sub-frames indexed 0 to 9. One sub-frame includes two consecutive slots. Accordingly, the radio frame includes 20 slots. The time taken for one sub-frame to be transmitted is denoted TTI (transmission time interval). For example, the length of one sub-frame may be 1ms, and the length of one slot may be 0.5ms.

The structure of the radio frame is for exemplary purposes only, and thus the number of sub-frames included in the radio frame or the number of slots included in the sub-frame may change variously.

One slot includes $N_{RB}$ resource blocks (RBs) in the frequency domain. For example, in the LTE system, the number of resource blocks (RBs), i.e., $N_{RB}$, may be one from 6 to 110.

The resource block is a unit of resource allocation and includes a plurality of sub-carriers in the frequency domain. For example, if one slot includes seven OFDM symbols in the time domain and the resource block includes 12 sub-carriers in the frequency domain, one resource block may include 7x12 resource elements (REs).

The physical channels in 3GPP LTE may be classified into data channels such as PDSCH (physical downlink shared channel) and PUSCH (physical uplink shared channel) and control channels such as PDCCH (physical downlink control channel), PCFICH (physical control format indicator channel), PHICH (physical hybrid-ARQ indicator channel) and PUCCH (physical uplink control channel).

The uplink channels include a PUSCH, a PUCCH, an SRS (Sounding Reference Signal), and a PRACH (physical random access channel).

<Measurement and measurement report>

In the mobile communication system, mobility support of the UE 100 is required. Accordingly, the UE 100 continuously measures a quality of a serving cell providing a current service and the quality of a neighboring cell. The UE 100 reports a measurement result to the network at an appropriate time and the network provides optimum mobility to the UE through handover or the like. Often, measurement of such a purpose is referred to as radio resource management (RRM).

Meanwhile, the UE 100 monitors a downlink quality of a primary cell (Pcell) based on a CRS. This is referred to as radio link monitoring (RLM).

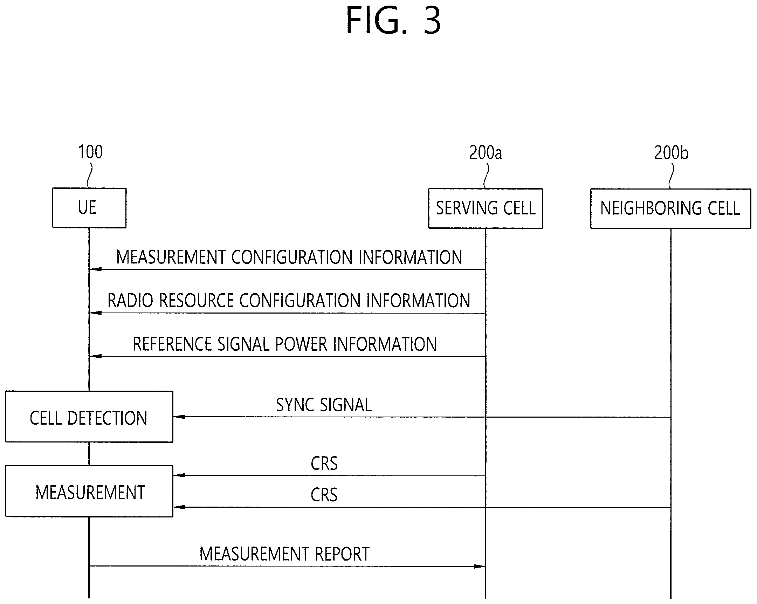

FIG. 3 illustrates a cell detection and measurement procedure.

As can be seen with reference to from FIG. 3, the UE detects the neighboring cell based on a synchronization signal (SS) transmitted from the neighboring cell. The SS may include a primary synchronization signal (PSS) and a secondary synchronization signal (SSS).

In addition, when each of he serving cell 200a and the neighboring cell 200b transmits a cell-specific reference signal (CRS) to the UE 100, the UE 100 performs measure through the CRS and transmits a measurement result thereof to the serving cell 200a. In this case, the UE 100 compares power of the received CRS based on information on received reference signal power.

In this case, the UE 100 may perform the measurement by three following methods.

1) Reference signal received power (RSRP): represents average received power of all REs that carry the CRS transmitted over the entire band. In this case, the average received power of all REs that carry a channel state information (CSI)-reference signal (RS) instead of the CRS.

2) Received signal strength indicator (RSSI): represents received power measured in the entire band. The RSSI includes all of the signal, interference, and thermal noise.

3) Reference symbol received quality (RSRQ): represents the CQI and may be determined as the RSRP/RSSI depending on a measurement bandwidth or subband. That is, the RSRQ refers to a signal-to-noise interference ratio (SINR). The RSRP does not provide sufficient mobility information, the RSRQ may be used instead of the RSRP in the process of handover or cell reselection.

The RSRQ may be calculated as RSSI/RSSP.

Meanwhile, as illustrated in FIG. 3, the UE 100 receives a radio resource configuration information element (IE) from the serving cell 100a for the measurement. The radio resource configuration dedicated information element (IE) is used for configuring/modifying/canceling a radio bearer, modifying a MAC configuration, and the like. The radio resource configuration IE includes subframe pattern information. The subframe pattern information is information on a measurement resource restriction pattern on the time domain for measuring RSRP and RSRQ for a serving cell (for example, a primary cell).

Meanwhile, the UE 100 receives a measurement configuration (hereinafter also referred to as "measconfig") information element (IE) from the serving cell 100a for the measurement. A message including the measurement configuration information element (IE) is referred to as a measurement configuration message. Here, the measurement configuration information element (IE) may be received through an RRC connection reconfiguration message. When a measurement result satisfies a reporting condition in the measurement configuration information, the UE reports the measurement result to the base station. A message including the measurement result is referred to as a measurement report message.

The measurement configuration IE may include measurement object information. The measurement object information is information about an object to be measured by the UE. The measurement object includes at least any one of an intra-frequency measurement object which is an intra-cell measurement object, an inter-frequency measurement object which is an inter-cell measurement object, and an inter-RAT measurement object which is an inter-RAT measurement object. For example, the intra-frequency measurement object may indicate a neighbor cell having the same frequency band as a serving cell, the inter-frequency measurement object may indicate a neighbor cell having a different frequency band from the serving cell, and the inter-RAT measurement object may indicate a neighbor cell of am RAT different from the RAT of the serving cell.

[Table 1]

| Description of measurement object field |
| --- |
| **carrierFreq**<br>This indicates the E-UTRA carrier frequency to which this configuration applies. |
| measCycleSCell<br>This indicates a cycle for measuring SCell in a deactivated state. The value may be set to 160, 256, and the like. When the value is 160, measurement is performed every 160 subframes. |

Meanwhile, the measurement configuration IE includes an IE (information element) as shown in table below.

[Table 2]

| Description of MeasConfig field |
| --- |
| **allowInterruptions**<br>When the value is True, this indicates that when the UE performs measurements using MeasCycleScell for carriers of the deactivated Scell, it is allowed to stop sending and receiving with the serving cell. |
| measGapConfig<br>Configure or release a measurement gap. |

The measGapConfig is used to configure or release a measurement gap (MG). The measurement gap MG is a period for performing cell identification and RSRP measurement on an inter frequency different from the serving cell.

[Table 3]

| Description of MeasConfig field |
| --- |
| **gapOffset**<br>The value of gapOffset may be set to either gp0 or gp1. gp0 corresponds to a gap offset of a pattern ID "0" having MGRP = 40 ms. Gp1 corresponds to a gap offset of a pattern ID "1" having MGRP = 40 ms. |

[Table 4]

| Gap pattern Id | Measurement Gap Length (MGL) | Measurement Gap Repetition Period (MGRP) | Minimum time to perform measurement for inter-frequency and inter-RAT during period of 480 ms |
| --- | --- | --- | --- |
| 0 | 6 ms | 40 ms | 60 ms |
| 1 | 6 ms | 80 ms | 30 ms |

If the UE requires a measurement gap to identify and measure inter-frequency and inter-RAT cells, the E-UTRAN (i.e., the base station) may determine a measurement gap (MG) having a constant gap period. The UE does not transmit or receive any data from the serving cell during the measurement gap period, retunes its RF chain to the inter-frequency, and then performs the measurement at the corresponding inter-frequency.

<Carrier Aggregation>

A carrier aggregation system is now described.

A carrier aggregation system aggregates a plurality of component carriers (CCs). A meaning of an existing cell is changed according to the above carrier aggregation. According to the carrier aggregation, a cell may signify a combination of a downlink component carrier and an uplink component carrier or an independent downlink component carrier.

Further, the cell in the carrier aggregation may be classified into a primary cell, a secondary cell, and a serving cell. The primary cell signifies a cell operated in a primary frequency. The primary cell signifies a cell which UE performs an initial connection establishment procedure or a connection reestablishment procedure or a cell indicated as a primary cell in a handover procedure. The secondary cell signifies a cell operating in a secondary frequency. Once the RRC connection is established, the secondary cell is used to provide an additional radio resource.

As described above, the carrier aggregation system may support a plurality of component carriers (CCs), that is, a plurality of serving cells unlike a single carrier system.

The carrier aggregation system may support a cross-carrier scheduling. The cross-carrier scheduling is a scheduling method capable of performing resource allocation of a PDSCH transmitted through other component carrier through a PDCCH transmitted through a specific component carrier and/or resource allocation of a PUSCH transmitted through other component carrier different from a component carrier basically linked with the specific component carrier.

**<Internet of Things (IoT) communication>**

Meanwhile, hereinafter, IoT will be described.

IoT refers to information exchange through the base station between IoT devices without accompanying human interaction and information exchange through the base station between an IoT device and a server. As such, IoT communication communicates via cellular base stations and thus is also referred to as cellular Internet of Things (CIoT).

Such IoT communication is a type of machine type communication (MTC). Therefore, the IoT device may be referred to as an MTC device.

Since the IoT communication has features that a transmission data amount is small and uplink or downlink data transmission and reception rarely occur, it is preferable to lower the cost of the IoT device and reduce battery consumption in accordance with a low data transmission rate. In addition, since the IoT device has a feature of low mobility, the channel environment is not almost changed.

As one method for low-cost IoT devices, regardless of a system bandwidth of the cell, the IoT device may use a sub-band of, for example, approximately 1.4 MHz.

IoT communication operating on such a reduced bandwidth may be called narrow band (NB) IoT communication or NB CIoT communication.

**<Next-generation mobile communication network>**

Thanks to the success of long term evolution (LTE)/LTE-advanced (LTE-A) for 4G mobile communication, interest in the next generation, i.e., 5-generation (so called 5G) mobile communication has been increased and researches have been continuously conducted.

The 5G mobile telecommunications defined by the International Telecommunication Union (ITU) refers to providing a data transmission rate of up to 20 Gbps and a feel transmission rate of at least 100 Mbps or more at any location. The official name is 'IMT-2020' and its goal is to be commercialized worldwide in 2020.

ITU proposes three usage scenarios, for example, enhanced Mobile BroadBand (eMBB) and massive machine type communication (mMTC) and ultra reliable and low latency communications (URLLC).

URLLC relates to usage scenarios that require high reliability and low latency. For example, services such as autonomous navigation, factory automation, augmented reality require high reliability and low latency (e.g., a delay time of 1 ms or less). Currently, the delay time of 4G (LTE) is statistically 21 to 43 ms (best 10%) and 33 to 75 ms (median). This is insufficient to support a service requiring a delay time of 1 ms or less. Next, an eMBB usage scenario relates to a usage scenario requiring a mobile ultra-wideband.

That is, the 5G mobile communication system aims at higher capacity than the current 4G LTE, may increase the density of mobile broadband users, and may support device to device (D2D), high stability and machine type communication (MTC). 5G research and development also aims at a lower latency time and lower battery consumption than a 4G mobile communication system to better implement the Internet of things. A new radio access technology (New RAT or NR) may be proposed for such 5G mobile communication.

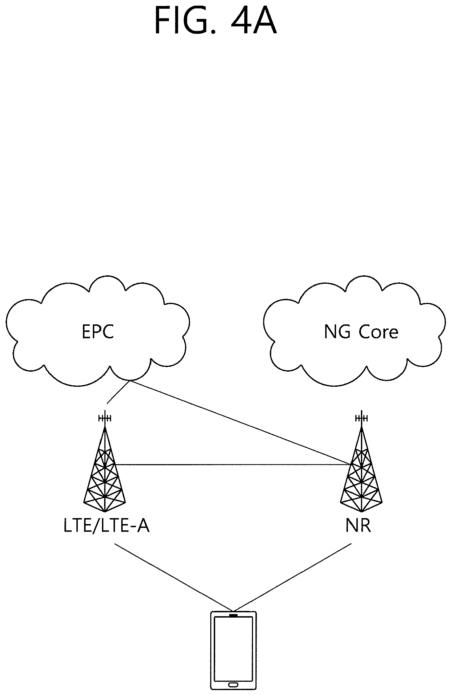

FIGS. 4A to 4C are exemplary diagrams illustrating exemplary architectures for services of the next generation mobile communication.

Referring to FIG. 4A, the UE is connected to LTE/LTE-A based cells and NR based cells in a dual connectivity (DC) manner.

The NR-based cell is connected to a core network for existing 4G mobile communication, that is, an evolved packet core (EPC).

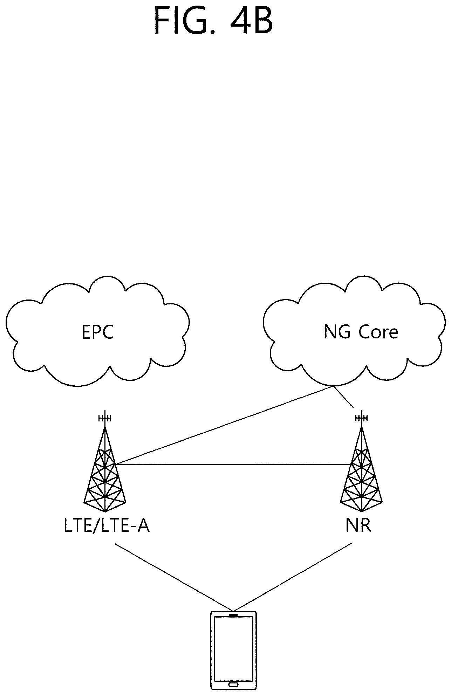

Referring to FIG. 4B, unlike FIG. 4A, the LTE/LTE-A based cell is connected to a core network for the 5G mobile communication, that is, a next generation (NG) core network.

The service scheme based on the architecture as illustrated in FIGS. 4A and 4B is called non-standalone (NSA).

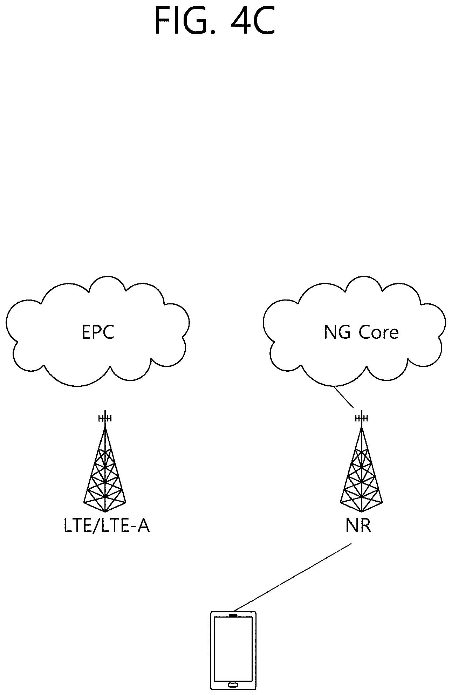

Referring to FIG. 4C, the UE is connected only to NR-based cells. The service method based on such an architecture is called standalone (SA).

On the other hand, in the NR, it may be considered that the reception from the base station uses a downlink subframe, and the transmission to the base station uses an uplink subframe. This method may be applied to paired spectra and unpaired spectra. A pair of spectra means that the two carrier spectra are included for downlink and uplink operations. For example, in a pair of spectra, one carrier may include a downlink band and an uplink band that are paired with each other.

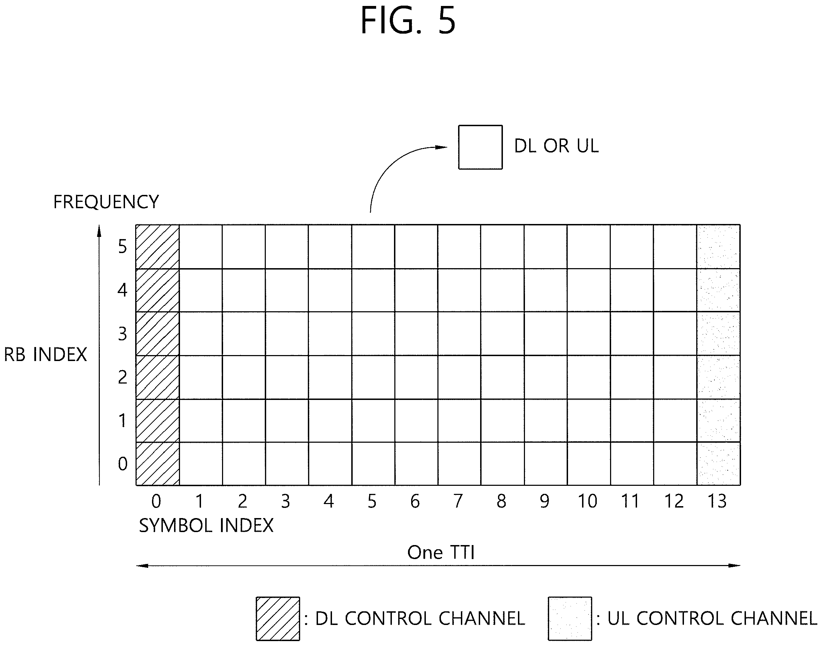

**FIG. 5 illustrates an example of a subframe type in NR.**

A transmission time interval (TTI) shown in FIG. 5 may be referred to as a subframe or slot for NR (or new RAT). The subframe (or slot) of FIG. 5 may be used in a TDD system of NR (or new RAT) to minimize the data transmission delay. As illustrated in FIG. 4, a subframe (or slot) includes 14 symbols, like the current subframe. The front symbol of the subframe (or slot) may be used for a DL control channel, and the rear symbol of the subframe (or slot) may be used for a UL control channel. The remaining symbols may be used for DL data transmission or UL data transmission. According to such a subframe (or slot) structure, downlink transmission and uplink transmission may be sequentially performed in one subframe (or slot). Accordingly, downlink data may be received within a subframe (or slot), and an uplink acknowledgment response (ACK/NACK) may be transmitted within the subframe (or slot). The structure of such a subframe (or slot) may be referred to as a self-contained subframe (or slot). The use of such a sub-frame (or slot) structure has an advantage that the time taken to retransmit the data where a receive error occurs is reduced and a latency time of the last data transmission may be minimized. In such a self-contained subframe (or slot) structure, a time gap may be required in a transition process from the transmission mode to the reception mode or from the reception mode to the transmission mode. To this end, some OFDM symbols at the time of switching from DL to UL in the subframe structure may be configured as a guard period (GP).

**<Support of various numerologies>**

In the next system, a number of numerologies may be provided to the UE with the development of a wireless communication technology.

The numerology may be defined by a cycle prefix (CP) length and a subcarrier spacing. One cell may provide a plurality of numerologies to the UE. When the index of the numerology is denoted by $\mu$, each subcarrier interval and corresponding CP length may be as shown in table below.

[Table 5]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, extended |
| 3 | 120 | Normal |
| 4 | 240 | Normal |

In the case of a normal CP, when the index of the numerology is denoted by $\mu$, the number $N^{slot}_{symb}$ of OFDM symbols per slot, the number $N^{frame,\mu}_{slot}$ of slots per frame, and the number $N^{subframe,\mu}_{slot}$ of slots per subframe are shown in Table below.

[Table 6]

| $\mu$ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

In the case of an extended CP, when the index of the numerology is denoted by $\mu$, the number $N^{slot}_{symb}$ of OFDM symbols per slot, the number $N^{frame,\mu}_{slot}$ of slots per frame, and the number $N^{subframe,\mu}_{slot}$ of slots per subframe are shown in Table below.

[Table 7]

| $\mu$ | $N^{slot}_{symb}$ | $N^{frame,\mu}_{slot}$ | $N^{subframe,\mu}_{slot}$ |
|---|---|---|---|
| 2 | 12 | 40 | 4 |

Meanwhile, in the next-generation mobile communication, each symbol in a symbol may be used as a downlink or as an uplink as shown in table below. In the following table, the uplink is denoted by U and the downlink is denoted by D. In Table below, X represents a symbol that may be used flexibly in the uplink or downlink.

[Table 8]

| Format | Symbol number in slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | X | X | X | X | X | X | X | X | X | X | X | X | X | X |
| 3 | D | D | D | D | D | D | D | D | D | D | D | D | D | X |
| 4 | D | D | D | D | D | D | D | D | D | D | D | D | X | X |
| 5 | D | D | D | D | D | D | D | D | D | D | D | X | X | X |

(continued)

| Format | Symbol number in slot | | | | | | | | | | | | | |
|--------|---|---|---|---|---|---|---|---|---|---|----|----|----|----|
| | 0 | 1 | 2 | 3 | 4 | 5 | 6 | 7 | 8 | 9 | 10 | 11 | 12 | 13 |
| 6 | D | D | D | D | D | D | D | D | D | D | X | X | X | X |
| 7 | D | D | D | D | D | D | D | D | D | X | X | X | X | X |
| 8 | X | X | X | X | X | X | X | X | X | X | X | X | X | U |
| 9 | X | X | X | X | X | X | X | X | X | X | X | X | U | U |
| 10 | X | U | U | U | U | U | U | U | U | U | U | U | U | U |
| 11 | X | X | U | U | U | U | U | U | U | U | U | U | U | U |
| 12 | X | X | X | U | U | U | U | U | U | U | U | U | U | U |
| 13 | X | X | X | X | U | U | U | U | U | U | U | U | U | U |
| 14 | X | X | X | X | X | U | U | U | U | U | U | U | U | U |
| 15 | X | X | X | X | X | X | U | U | U | U | U | U | U | U |
| 16 | D | X | X | X | X | X | X | X | X | X | X | X | X | X |
| 17 | D | D | X | X | X | X | X | X | X | X | X | X | X | X |
| 18 | D | D | D | X | X | X | X | X | X | X | X | X | X | X |
| 19 | D | X | X | X | X | X | X | X | X | X | X | X | X | U |
| 20 | D | D | X | X | X | X | X | X | X | X | X | X | X | U |
| 21 | D | D | D | X | X | X | X | X | X | X | X | X | X | U |
| 22 | D | X | X | X | X | X | X | X | X | X | X | X | U | U |
| 23 | D | D | X | X | X | X | X | X | X | X | X | X | U | U |
| 24 | D | D | D | X | X | X | X | X | X | X | X | X | U | U |
| 25 | D | X | X | X | X | X | X | X | X | X | X | U | U | U |
| 26 | D | D | X | X | X | X | X | X | X | X | X | U | U | U |
| 27 | D | D | D | X | X | X | X | X | X | X | X | U | U | U |
| 28 | D | D | D | D | D | D | D | D | D | D | D | D | X | U |
| 29 | D | D | D | D | D | D | D | D | D | D | D | X | X | U |
| 30 | D | D | D | D | D | D | D | D | D | D | X | X | X | U |
| 31 | D | D | D | D | D | D | D | D | D | D | D | X | U | U |
| 32 | D | D | D | D | D | D | D | D | D | D | X | X | U | U |
| 33 | D | D | D | D | D | D | D | D | D | X | X | X | U | U |
| 34 | D | X | U | U | U | U | U | U | U | U | U | U | U | U |
| 35 | D | D | X | U | U | U | U | U | U | U | U | U | U | U |
| 36 | D | D | D | X | U | U | U | U | U | U | U | U | U | U |
| 37 | D | X | X | U | U | U | U | U | U | U | U | U | U | U |
| 38 | D | D | X | X | U | U | U | U | U | U | U | U | U | U |
| 39 | D | D | D | X | X | U | U | U | U | U | U | U | U | U |
| 40 | D | X | X | X | U | U | U | U | U | U | U | U | U | U |
| 41 | D | D | X | X | X | U | U | U | U | U | U | U | U | U |
| 42 | D | D | D | X | X | X | U | U | U | U | U | U | U | U |

(continued)

| Format | Symbol number in slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 43 | D | D | D | D | D | D | D | D | D | X | X | X | X | U |
| 44 | D | D | D | D | D | D | X | X | X | X | X | X | U | U |
| 45 | D | D | D | D | D | D | X | X | U | U | U | U | U | U |
| 46 | D | D | D | D | D | D | X | D | D | D | D | D | D | X |
| 47 | D | D | D | D | D | X | X | D | D | D | D | D | X | X |
| 48 | D | D | X | X | X | X | X | D | D | X | X | X | X | X |
| 49 | D | X | X | X | X | X | X | D | X | X | X | X | X | X |
| 50 | X | U | U | U | U | U | U | X | U | U | U | U | U | U |
| 51 | X | X | U | U | U | U | U | X | X | U | U | U | U | U |
| 52 | X | X | X | U | U | U | U | X | X | X | U | U | U | U |
| 53 | X | X | X | X | U | U | U | X | X | X | X | U | U | U |
| 54 | D | D | D | D | D | X | U | D | D | D | D | D | X | U |
| 55 | D | D | X | U | U | U | U | D | D | X | U | U | U | U |
| 56 | D | X | U | U | U | U | U | D | X | U | U | U | U | U |
| 57 | D | D | D | D | X | X | U | D | D | D | D | X | X | U |
| 58 | D | D | X | X | U | U | U | D | D | X | X | U | U | U |
| 59 | D | X | X | U | U | U | U | D | X | X | U | U | U | U |
| 60 | D | X | X | X | X | X | U | D | X | X | X | X | X | U |
| 61 | D | D | X | X | X | X | U | D | D | X | X | X | X | U |

**<Operating band in NR>**

The operating band in NR is as follows.

The operating band in Table 9 below is an operating band that has been reformed from the LTE/LTE-A operating band.

[Table 9]

| NR operating band | Uplink (UL) operating band | Downlink (DL) operating band | Duple x mode |
|---|---|---|---|
| | $F_{UL\_low}$ - $F_{UL\_high}$ | $F_{DL\_low}$ - $F_{DL\_high}$ | |
| n1 | 1920 MHz - 1980 MHz | 2110 MHz - 2170 MHz | FDD |
| n2 | 1850 MHz - 1910 MHz | 1930 MHz - 1990 MHz | FDD |
| n3 | 1710 MHz - 1785 MHz | 1805 MHz - 1880 MHz | FDD |
| n5 | 824 MHz - 849 MHz | 869 MHz - 894 MHz | FDD |
| n7 | 2500 MHz - 2570 MHz | 2620 MHz - 2690 MHz | FDD |
| n8 | 880 MHz - 915 MHz | 925 MHz - 960 MHz | FDD |
| n20 | 832 MHz - 862 MHz | 791 MHz - 821 MHz | FDD |
| n28 | 703 MHz - 748 MHz | 758 MHz - 803 MHz | FDD |
| n38 | 2570 MHz - 2620 MHz | 2570 MHz - 2620 MHz | TDD |

(continued)

| NR operating band | Uplink (UL) operating band | Downlink (DL) operating band | Duple x mode |
|---|---|---|---|
| | $F_{UL\_low}$ - $F_{UL\_high}$ | $F_{DL\_low}$ - $F_{DL\_high}$ | |
| n41 | 2496 MHz - 2690 MHz | 2496 MHz - 2690 MHz | TDD |
| n50 | 1432 MHz - 1517 MHz | 1432 MHz - 1517 MHz | TDD |
| n51 | 1427 MHz - 1432 MHz | 1427 MHz - 1432 MHz | TDD |
| n66 | 1710 MHz - 1780 MHz | 2110 MHz - 2200 MHz | FDD |
| n70 | 1695 MHz - 1710 MHz | 1995 MHz - 2020 MHz | FDD |
| n71 | 663 MHz - 698 MHz | 617 MHz - 652 MHz | FDD |
| n74 | 1427 MHz - 1470 MHz | 1475 MHz - 1518 MHz | FDD |
| n75 | N/A | 1432 MHz - 1517 MHz | SDL |
| n76 | N/A | 1427 MHz - 1432 MHz | SDL |
| n77 | 3300 MHz - 4200 MHz | 3300 MHz - 4200 MHz | TDD |
| n78 | 3300 MHz - 3800 MHz | 3300 MHz - 3800 MHz | TDD |
| n79 | 4400 MHz - 5000 MHz | 4400 MHz - 5000 MHz | TDD |
| n80 | 1710 MHz - 1785 MHz | N/A | SUL |
| n81 | 880 MHz - 915 MHz | N/A | SUL |
| n82 | 832 MHz - 862 MHz | N/A | SUL |
| n83 | 703 MHz - 748 MHz | N/A | SUL |
| n84 | 1920 MHz -1980 MHz | N/A | SUL |

The following table shows an NR operating band defined on a high frequency.

[Table 10]

| NR operating band | Uplink (UL) operating band | Downlink (DL) operating band | Duple x mode |
|---|---|---|---|
| | $F_{UL\_low}$ - $F_{UL\_high}$ | $F_{DL\_low}$ - $F_{DL\_high}$ | |
| n257 | 26500 MHz - 29500 MHz | 26500 MHz - 29500 MHz | TDD |
| n258 | 24250 MHz - 27500 MHz | 24250 MHz - 27500 MHz | TDD |
| n259 | 37000 MHz - 40000 MHz | 37000 MHz - 40000 MHz | TDD |

On the other hand, when the operating band of the above table is used, the channel bandwidth is used as shown in Table below.

[Table 11]

| SCS (kHz ) | 5MHz | 10MHz | 15MHz | 20 MHz | 25 MHz | 30 MHz | 40 MHz | 50MHz | 60 MHz | 80 MHz | 100 MHz |
|---|---|---|---|---|---|---|---|---|---|---|---|
| | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ |
| 15 | 25 | 52 | 79 | 106 | 133 | [160] | 216 | 270 | N/A | N/A | N/A |
| 30 | 11 | 24 | 38 | 51 | 65 | [78] | 106 | 133 | 162 | 217 | 273 |
| 60 | N/A | 11 | 18 | 24 | 31 | [38] | 51 | 65 | 79 | 107 | 135 |

In the above table, SCS means subcarrier spacing. In the above table, $N_{RB}$ represents the number of RBs.
On the other hand, when the operating band of the above table is used, the channel bandwidth is used as shown in Table below.

[Table 12]

| SCS (kHz) | 50MHz | 100MHz | 200MHz | 400 MHz |
|---|---|---|---|---|
| | $N_{RB}$ | $N_{RB}$ | $N_{RB}$ | $N_{RB}$ |
| 60 | 66 | 132 | 264 | N.A |
| 120 | 32 | 66 | 132 | 264 |

**<SS block in NR>**

In 5G NR, the UE defines a physical block channel (PBCH) including information required to perform an initial access, that is, a master information block (MIB) and a synchronization signal SS (including PSS and SSS). In addition, a plurality of SS blocks are bound to be defined as an SS burst, and a plurality of SS bursts are bound to be defined as an SS burst set. Each SS block is assumed to be beamformed in a specific direction, and several SS blocks in the SS burst set are designed to support UEs in different directions.

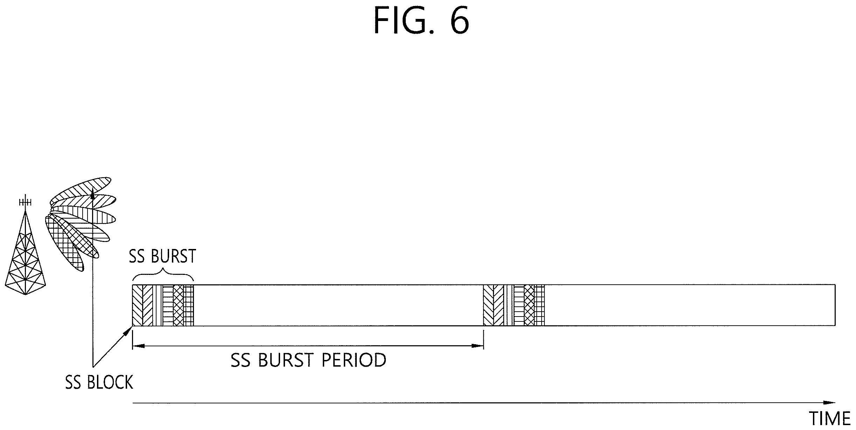

FIG. 6 is an exemplary diagram illustrating an example of an SS block in NR.

Referring to FIG. 6, the SS burst is transmitted every predetermined periodicity. Therefore, the UE receives the SS block and performs cell detection and measurement.

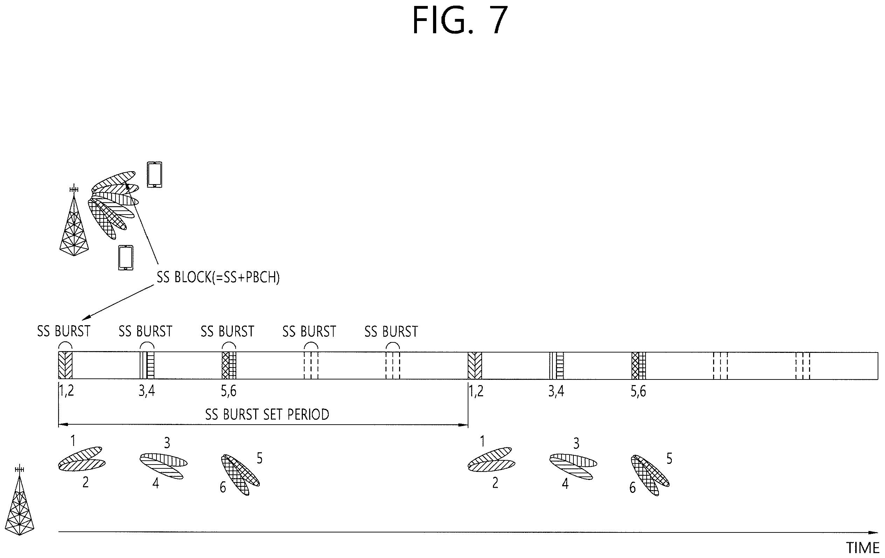

On the other hand, in 5G NR, beam sweeping is performed on the SS. Hereinafter, it will be described with reference to FIG. 7.

FIG. 7 is an exemplary diagram illustrating an example of beam sweeping in NR.

The base station transmits each SS block in the SS burst with beam sweeping over time. At this time, the SS blocks in the SS burst set are transmitted in order to support UEs existing in different directions. In FIG. 6, the SS burst set includes SS blocks 1 to 6, and each SS burst includes two SS blocks.

<Channel Raster and Sync Raster>

Hereinafter, a channel raster and a sync raster will be described.

A frequency channel raster is defined as a set of RF reference frequencies ($F_{REF}$). The RF reference frequency may be used as a signal for indicating the position of an RF channel, an SS block, and the like.

The global frequency raster is defined for all frequencies of 0 to 100 GHz. The unit of the global frequency raster is denoted by $\Delta F_{Global}$.

The RF reference frequency is specified by an NR absolute radio frequency channel number (NR-ARFCN) in the range of the global frequency raster (0 .. 2016666). The relationship between the NR-ARFCN and the RF reference frequency $F_{REF}$ of MHz may be expressed by the following Equation. Here, $F_{REF-Offs}$ and $N_{Ref-Offs}$ are shown in the following Table.

[Equation 1]

$$F_{REF} = F_{REF\text{-}Offs} + \Delta F_{Global} \left( N_{REF} - N_{REF\text{-}Offs} \right)$$

[Table 13]

| Frequency range (MHz) | $\Delta F_{Global}$ (kHz) | $F_{REF\text{-}Offs}$ (MHz) | $N_{REF\text{-}Offs}$ | Range of $N_{REF}$ |
|---|---|---|---|---|
| 0 - 3000 | 5 | 0 | 0 | 0 - 599999 |
| 3000 - 24250 | 15 | 3000 | 600000 | 600000 - 2016666 |
| 24250-100000 | 60 | 24250.08 | 2016667 | 2016667 - 3279165 |

The channel raster represents a subset of RF reference frequencies that may be used to identify RF channel locations in the uplink and downlink. The RF reference frequency for the RF channel may be mapped to a resource element on the carrier.

The mapping between the RF reference frequency of the channel raster and the corresponding resource element may be used to identify an RF channel location. The mapping depends on the total number of RBs allocated to the channel and is applies to both UL and DL.

In the case of $N_{RB}$ mod 2 =0,
an RE index k is 0, and
the PRB number is as follows.

$$n_{PRB} = \left\lfloor \frac{N_{RB}}{2} \right\rfloor$$

In the case of $N_{RB}$ mod 2 = 1,
an RE index k is 6, and
the PRB number is as follows.

$$n_{PRB} = \left\lfloor \frac{N_{RB}}{2} \right\rfloor$$

The RF channel location of the channel raster on each NR operating band may be represented as shown in the following Table.

[Table 14]

| NR operating band | $\Delta F_{Raster}$ (kHz) | Uplink frequency range of $N_{REF}$ (First - <Step size> - Last) | Downlink frequency range of $N_{REF}$ (First - <Step size> - Last) |
|---|---|---|---|
| n1 | 100 | 384000 - <20> - 396000 | 422000 - <20> - 434000 |
| n2 | 100 | 370000 - <20> - 382000 | 386000 - <20> - 398000 |
| n3 | 100 | 342000 - <20> - 357000 | 361000 - <20> - 376000 |
| n5 | 100 | 164800 - <20> - 169800 | 173800 - <20> - 178800 |
| n7 | 100 | 500000 - <20> - 514000 | 524000 - <20> - 538000 |
| n8 | 100 | 176000 - <20> - 183000 | 185000 - <20> - 192000 |
| n12 | 100 | 139800 - <20> - 143200 | 145800 - <20> - 149200 |
| n20 | 100 | 166400 - <20> - 172400 | 158200 - <20> - 164200 |
| n25 | 100 | 370000 - <20> - 383000 | 386000 - <20> - 399000 |
| n28 | 100 | 140600 - <20> - 149600 | 151600 - <20> - 160600 |
| n34 | 100 | 402000 - <20> - 405000 | 402000 - <20> - 405000 |
| n38 | 100 | 514000 - <20> - 524000 | 514000 - <20> - 524000 |
| n39 | 100 | 376000 - <20> - 384000 | 376000 - <20> - 384000 |
| n40 | 100 | 460000 - <20> - 480000 | 460000 - <20> - 480000 |
| n41 | 15 | 499200 - <3> - 537999 | 499200 - <3> - 537999 |
| | 30 | 499200 - <6> - 537996 | 499200 - <6> - 537996 |
| n51 | 100 | 285400 - <20> - 286400 | 285400 - <20> - 286400 |
| n66 | 100 | 342000 - <20> - 356000 | 422000 - <20> - 440000 |
| n70 | 100 | 339000 - <20> - 342000 | 399000 - <20> - 404000 |
| n71 | 100 | 132600 - <20> - 139600 | 123400 - <20> -130400 |
| n75 | 100 | N/A | 286400 - <20> - 303400 |

(continued)

| NR operating band | $\Delta F_{Raster}$ (kHz) | Uplink frequency range of $N_{REF}$ (First - <Step size> - Last) | Downlink frequency range of $N_{REF}$ (First - <Step size> - Last) |
|---|---|---|---|
| n76 | 100 | N/A | 285400 - <20> - 286400 |
| n77 | 15 | 620000 - <1> - 680000 | 620000 - <1> - 680000 |
| | 30 | 620000 - <2> - 680000 | 620000 - <2> - 680000 |
| n78 | 15 | 620000 - <1> - 653333 | 620000 - <1> - 653333 |
| | 30 | 620000 - <2> - 653332 | 620000 - <2> - 653332 |
| n79 | 15 | 693334 - <1> -733333 | 693334 - <1> -733333 |
| | 30 | 693334 - <2> - 733332 | 693334 - <2> - 733332 |
| n80 | 100 | 342000 - <20> - 357000 | N/A |
| n81 | 100 | 176000 - <20> - 183000 | N/A |
| n82 | 100 | 166400 - <20> - 172400 | N/A |
| n83 | 100 | 140600 - <20> -149600 | N/A |
| n84 | 100 | 384000 - <20> - 396000 | N/A |
| n86 | 100 | 342000 - <20> - 356000 | N/A |

[Table 15]

| NR operating band | $\Delta F_{Raster}$ (kHz) | Uplink and downlink frequency range (First - <Step size> - Last) |
|---|---|---|
| n257 | 60 | 2054166 - <1> - 2104165 |
| | 120 | 2054167 - <2> - 2104165 |
| n258 | 60 | 2016667 - <1> - 2070832 |
| | 120 | 2016667 - <2> - 2070831 |
| n260 | 60 | 2229166 - <1> - 2279165 |
| | 120 | 2229167 - <2> - 2279165 |
| n261 | 60 | 2070833 - <1> - 2084999 |
| | 120 | 2070833 - <2> - 2087497 |

On the other hand, the sync raster represents the frequency location of the SS block used to obtain system information by the UE. The frequency location of the SS block may be defined as $SS_{REF}$ using the corresponding GSCN number.

<Disclosure of this specification>

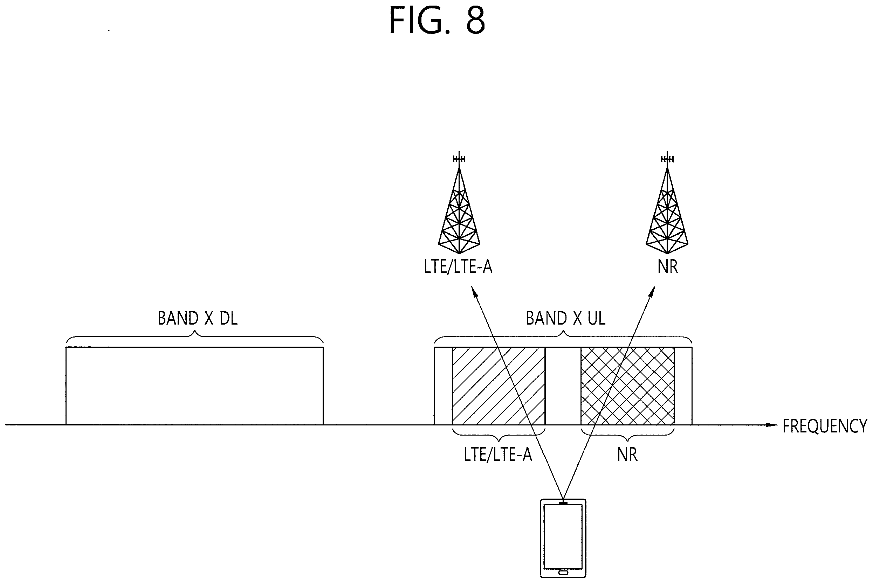

FIG. 8 illustrates an example in which LTE/LTE-A and NR share an uplink in an arbitrary band.
Referring to FIG. 8, LTE / LTE-A and NR may share any one of bands shown in Table 9 (i.e., a band for LTE/LTE-A, but reformed for NR).
In particular, one UE may use an uplink (UL) of the corresponding band as an LTE/LTE-A in a TDD method, or as an NR.
Hereinafter, the operation of the UE in such a situation will be described.

**I. First disclosure**

Assuming that the UE shares one band for LTE/LTE-A and NR, the subcarriers of the uplink band need to be aligned to avoid inter-cell interference (ICI). In addition, the DC needs to be aligned with the subcarriers. The problem is that the UL carrier for LTE/LTE-A is shifted to 7.5 kHz, while the UL carrier for NR is placed on a subcarrier. Therefore, in order to align UL subcarriers, the following options may be presented.

Option 1: Baseband (BB) shift

Option 2: Digital rotator

Option 3: RF shift using independent RF parts

Option 4: RF shift using shared RF

The advantages and disadvantages of each option are shown in Table below.

[Table 16]

|  | Advantages | Disadvantages |
|---|---|---|
| Option 1: | No RF retuning time is required | It is difficult because standardized techniques need to be modified. |
| Option 2: | No RF retuning time is required | The standardized techniques may be modified. |
| Option 3: | No RF retuning time is required  It is not required to modify standardized techniques. | Implementation cost and complexity of UE increase. |
| Option 4: | It is not required to modify standardized techniques. | RF retuning time needs to be increased.  System performance is deteriorated. |

From the above Table, Option 2 is the most practical option if sharing of UL subcarriers may not be avoided. Therefore, it will be proposed as follows in the present section.

Proposal 1: It is proposed to use the digital rotator according to Option 2.

On the other hand, besides the implementation aspect, the channel raster needs to be well defined because the actual carrier in terms of the RF synthesizer frequency is shifted with 7.5 kHz from an LTE carrier. To solve this problem, the following approach method may be used for an LTE-NR UL sharing band.

Method 1) 7.5 kHz is shifted from the NR UL channel raster.

Method 2) The NR UL channel raster shifted by 7.5 kHz is defined.

In the two methods, the method 1 may be preferred to maintain consistency with common NR channel raster definition. It is determined that when it is considered that the LTE system is fully relocated to NR later, the method 1 is a definitive method to define the NR channel raster. In the case of the method 1 itself, NR UE may detect whether 7.5 kHz has been shifted by various methods such as LTE cell detection, reception of preset information and additional signals. Based on this content, it will be proposed in the present section as follows.

Proposal 2. The proposal 2 follows a general design of a normal NR channel raster, but the UE assumes 7.5 kHz is shifted.

According to the above proposal, when the UL band is shared between LTE and NR, the NR-based UE shifts 7.5 kHz based on the above assumption without shifting the channel raster by 7.5 kHz. That is, the NR-based UE performs cell detection on the LTE cell, or uses information previously stored for each carrier/band, or shifts 7.5 kHz using the signaled information. In this way, even when all LTE-NR sharing bands are converted to NR later, the definition of the channel raster may be maintained without a change.

The contents of the first disclosure as described above may be summarized as follows.

For each operating band, a subset of frequencies from the global frequency raster may be applied to the corresponding band and create a channel raster of a $\Delta F$Raster unit. Here, $\Delta F$Raster may be equal to or larger than $\Delta F_{Global}$.

The reference frequency FREF for an arbitrary band may be shifted as illustrated in the following Equation.

[Equation 2]

$$F_{REF\_shift} = F_{REF} + \Delta_{shift}, \Delta_{shift} = 0kHz \text{ or } 7.5kHz.$$

Here, $\Delta_{shift}$ may be received through an upper layer parameter from the base station (i.e., serving cell).

## II. Second disclosure

Among the options of the first disclosure, it is difficult to adopt the option 1 because an improvement or change of the physical layer of option 1 is required. For options 2, 3 and 4, standardized techniques, particularly, requirements such as frequency error, in-band emission, carrier leakage EVM, and the like need to be modified. However, since the frequency error is performed with RS-based measurement and in-band emission is performed with RB unit measurement, there is no need to significantly improve the corresponding requirements in the actual standard.

It is considered that the sharing of the UL band between the LTE/LTE-A and the NR is currently performed at a subframe or symbol level unit. At this time, a switching time between the LTE/LTE-A and the NR may be differently required.

When the switching between the LTE/LTE-A and the NR is performed by a symbol unit, the switching may be performed within a short time (within about 5 us). Therefore, the options 2 and 3 may be applied.

However, when the switching between the LTE/LTE-A and the NR is performed on a symbol unit, the switching may be performed in a somewhat longer time. Even in the case, the options 2 and 3 may be applied. However, the option 4 may be applied to only UEs with improved PLL for fast RF retuning.

Accordingly, when the UE performs the switching between the LTE/LTE-A and the NR, the base station needs to recognize the switching time required by each UE implementation method. Accordingly, in the present section, it is proposed that the UE transmits information on the switching time to the base station. The information on the switching time may be included in the UE capability information and transmitted to the base station.

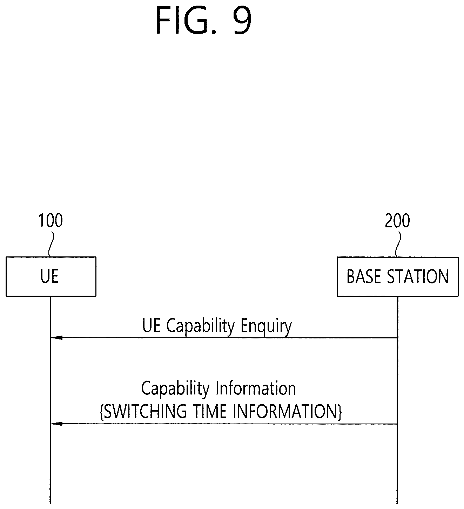

**FIG. 9 is a flowchart illustrating a method according to the second disclosure of the present invention.**

Referring to FIG. 9, the base station may transmit a UE capability inquiry message.

Then, the UE 100 may transmit a capability information message to the base station. The capability information message may include information on the switching time.

The information may indicate, for example, whether the UE supports fast switching or normal switching. In other words, the information may indicate whether the switching type supported by the UE is fast switching or normal switching. When the UE supports the fast switching, the information may indicate a SupportFastSwitch. Alternatively, when the UE supports the normal switching, the information may indicate SupportNormalSwitch. Alternatively, the information may be expressed in bits. For example, bit 0 may represent SupportNormalSwitch. Alternatively, bit 1 may indicate Support-FastSwitch. To this end, the UE may set the information on the switching type in the capability information.

Accordingly, the base station recognizes the switching time of the UE and may support UL switching between the LTE/LTE-A and the NR in an optimal method.

The embodiments of the present invention which has been described up to now may be implemented through various means. For example, the embodiments of the present invention may be implemented by hardware, firmware, software, or combinations thereof. In detail, the embodiments will be descried with reference to the drawings.

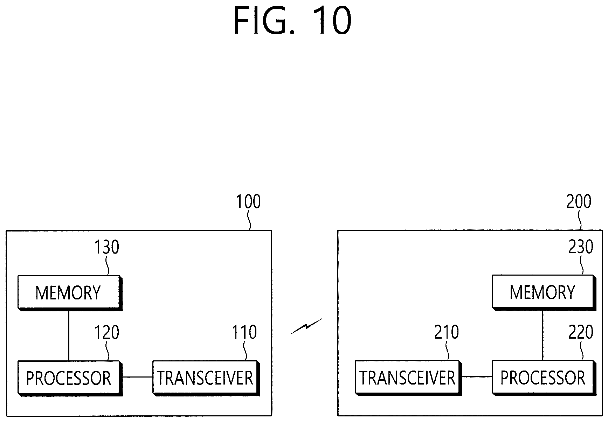

FIG. 10 is a block diagram illustrating a wireless device and a base station in which the disclosure of the present invention is implemented.

Referring to FIG. 10, a wireless device 100 and a base station 200 may implement the disclosure of this specification.

The illustrated wireless device 100 includes a processor 101, a memory 102, and a transceiver 103. Similarly, the illustrated base station 200 includes a processor 201, a memory 202, and a transceiver 203. The processors 101 and 201, the memories 102 and 202 and the transceivers 103 and 203 illustrated may be implemented as separate chips, or at least two blocks/functions may be implemented through a single chip.

The transceivers 103 and 203 include transmitters and receivers. When a specific operation is performed, only the operation of either the transmitter or the receiver may be performed, or both the transmitter and the receiver operations may be performed. The transceivers 103 and 203 may include one or more antennas that transmit and/or receive the radio signals. In addition, the transceivers 103 and 203 may include an amplifier for amplifying a reception signal and/or a transmission signal, and a band-pass filter for transmission on a specific frequency band.

The processors 101 and 201 may implement functions, processes, and/or methods proposed in this specification. The processors 101 and 201 may include encoders and decoders. For example, the processors 101 and 202 may perform operations according to the foregoing description. The processors 101 and 201 may include an application-specific integrated circuit (ASIC), another chipset, a logic circuit, a data processing device and/or a converter converting a baseband signal and the radio signal into each other.

The memories 102 and 202 may include a read-only memory (ROM), a random access memory (RAM), a flash memory, a memory card, a storage medium, and/or other storage devices.

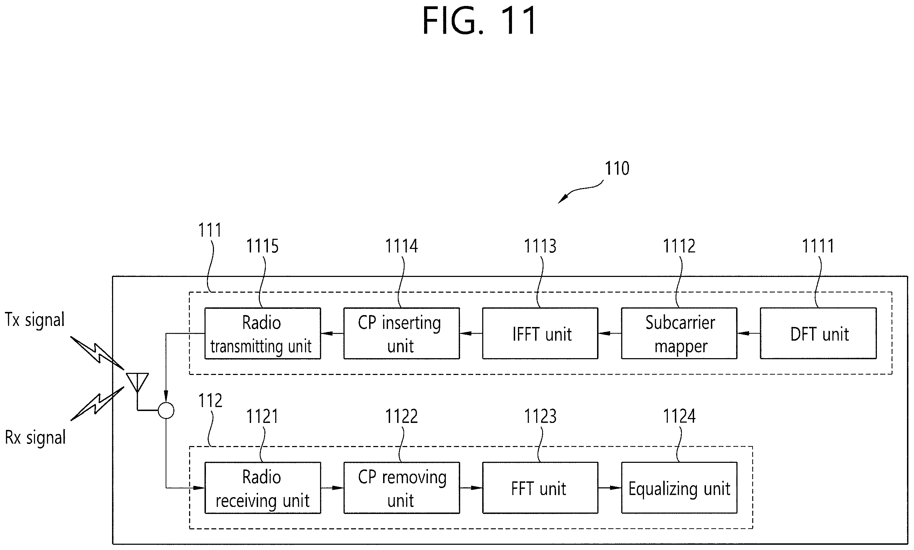

**FIG. 11 is a detailed block diagram of the transceiver of the wireless device illustrated in FIG. 10.**

Referring to FIG. 11, the transceiver 110 includes a transmitter 111 and a receiver 112. The transmitter 111 includes a discrete Fourier transform (DFT) unit 1111, a subcarrier mapper 1112, an IFFT unit 1113, a CP inserting unit 11144, and a wireless transmitter 1115. The transmitter 111 may further include a modulator. The transceiver 110 may further include a scramble unit, a modulation mapper (not shown), a layer mapper, and a layer permutator, which may be arranged before the DFT unit 1111. That is, in order to prevent an increase in peak-to-average power ratio (PAPR), the transmitter 111 first passes information through the DFT 1111 before mapping a signal to a subcarrier. A signal spread (or precoded in the same sense) by the DFT unit 1111 is subcarrier-mapped through the subcarrier mapper 1112 and then made to a signal on a time axis through the inverse fast Fourier transform (IFFT) unit 1113.

The DFT unit 1111 performs DFT on the input symbols to output complex-valued symbols. For example, when Ntx symbols are input (however, Ntx is a natural number), the DFT size is Ntx. The DFT unit 1111 may be referred to as a transform precoder. The subcarrier mapper 1112 maps the complex-valued symbols to subcarriers in the frequency domain. The complex-valued symbols may be mapped to resource elements corresponding to resource blocks allocated for data transmission. The subcarrier mapper 1112 may be referred to as a resource element mapper. The IFFT unit 1113 performs IFFT on the input symbol and outputs a baseband signal for data, which is a time domain signal. The CP inserting unit 1114 copies a part of the rear part of the base band signal for data and inserts the copied rear part to the front part of the base band signal for data. Inter-symbol interference (ISI) and inter-carrier interference (ICI) are prevented through CP insertion, and orthogonality may be maintained in a multi-path channel.

On the other hand, the receiver 112 includes a wireless receiving unit 1121, a CP removing unit 1122, an FFT unit 1123, and an equalizing unit 1124. The wireless receiving unit 1121, the CP removing unit 1122 and the FFT unit 1123 of the receiver 112 perform a reverse function of the wireless receiving unit 1115, the CP removing unit 1114 and the FFT unit 1113 of the transmitter 111. The receiver 112 may further include a demodulator.

**Claims**

1. A method for performing an uplink (UL) transmission, the method performed by a user equipment (UE) and comprising:

   transmitting a UE capability information to a serving cell,
   wherein the UE capability information includes information related to a switching type between a long term evolution (LTE) UL transmission and a new radio access technology (NR) UL transmission,
   wherein the information related to the switching type indicates whether the UE supports a first switching type or a second switching type, which is faster than the first switching type.

2. The method of claim 1, wherein the UE supports a dual connectivity with a LTE and a NR.

3. The method of claim 2, wherein the dual connectivity is configured to share an UL between the LTE and the NR.

4. The method of claim 1, further comprising:
   determining one of the first switching type and the second switching type.

5. The method of claim 4, further comprising:
   setting a value for indicating the determined switching type into the UE capability information.

6. The method of claim 1, further comprising:
   receiving a UE capability enquiry message.

7. The method of claim 1, further comprising:

   receiving a signal including information related to a 7.5 kHz shift for a channel raster; and

using the 7.5 kHz shift for the channel raster.

8. The method of claim 7, wherein the channel raster defines a plurality of reference frequencies used to identify positions of channels.

9. A user equipment (UE) for performing an uplink (UL) transmission, the UE comprising:

a transceiver; and
a processor configured to control the transceiver,
wherein the processor transmits, via the transceiver, a UE capability information to a serving cell,
wherein the UE capability information includes information related to a switching type between a long term evolution (LTE) UL transmission and a new radio access technology (NR) UL transmission,
wherein the information related to the switching type indicates whether the UE supports a first switching type or a second switching type, which is faster than the first switching type.

10. The UE of claim 9, wherein the transceiver supports a dual connectivity with a LTE and a NR.

11. The UE of claim 10, wherein the dual connectivity is configured to share an UL between the LTE and the NR.

12. The UE of claim 9, wherein the processor is configured to determine one of the first switching type and the second switching type.

13. The UE of claim 12, wherein the processor is configured to set a value for indicating the determined switching type into the UE capability information.

14. The UE of claim 1, wherein the processor is configured to control the transceiver to receive a UE capability enquiry message.

15. The UE of claim 1, wherein the processor is configured to
control the transceiver to receive a signal including information related to a 7.5 kHz shift for a channel raster; and
use the 7.5 kHz shift for the channel raster.

# FIG. 1

# FIG. 2

RADIO FRAME

SUBFRAME

SLOT

| #0 | #1 | #2 | • • • | #18 | #19 |
|----|----|----|-------|-----|-----|

| 0 | 1 | 2 | 3 | 4 | 5 | 6 | 7 | 8 | 9 | 10 | 11 | 12 | 13 |
|---|---|---|---|---|---|---|---|---|---|----|----|----|----|

SYMBOL

# FIG. 3

# FIG. 4A

EPC

NG Core

LTE/LTE-A

NR

# FIG. 4B

# FIG. 4C

EPC

NG Core

LTE/LTE-A

NR

# FIG. 5

FREQUENCY

DL OR UL

RB INDEX

5

4

3

2

1

0

0  1  2  3  4  5  6  7  8  9  10  11  12  13

SYMBOL INDEX

One TTI

: DL CONTROL CHANNEL        : UL CONTROL CHANNEL

EP 3 500 054 A1

FIG. 6

# FIG. 7

SS BLOCK(=SS+PBCH)

SS BURST   SS BURST   SS BURST   SS BURST   SS BURST

1,2        3,4        5,6                              1,2        3,4        5,6

SS BURST SET PERIOD

1          3          5                                1          3          5
2          4          6                                2          4          6

TIME

EP 3 500 054 A1

# FIG. 8

EP 3 500 054 A1

# FIG. 9

100                                              200

| UE |                            | BASE STATION |

UE Capability Enquiry

Capability Information
{SWITCHING TIME INFORMATION}

# FIG. 10

100

130

MEMORY

120                                110

PROCESSOR      TRANSCEIVER

200

230

MEMORY

210              220

TRANSCEIVER    PROCESSOR

# FIG. 11

# EP 3 500 054 A1

<table>
<tr><td colspan="2"><strong>INTERNATIONAL SEARCH REPORT</strong></td><td>International application No.<br><strong>PCT/KR2018/011613</strong></td></tr>
</table>

**A. CLASSIFICATION OF SUBJECT MATTER**

*H04W 76/16(2018.01)i, H04W 8/24(2009.01)i*

According to International Patent Classification (IPC) or to both national classification and IPC

**B. FIELDS SEARCHED**

Minimum documentation searched (classification system followed by classification symbols)
H04W 76/16; H04B 1/10; H04B 15/00; H04W 8/24

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: UE capability information, LTE UL transmission, NR transmission, switching type, first-second switch

**C. DOCUMENTS CONSIDERED TO BE RELEVANT**

| Category* | Citation of document, with indication, where appropriate, of the relevant passages | Relevant to claim No. |
|---|---|---|
| X | APPLE, "UE Capability Indication for Single UL Transmission of LTE-NR DC", R2-1709700, 3GPP TSG-RAN WG2 #99, Berlin, Germany, 27 August 2017 See pages 1-3. | 1-5,9-13 |
| Y | | 6-8,14,15 |
| Y | AT&T, "UE Capability Indication of Bearer Split for LTE-NR Dual Connectivity", R2-1708203, 3GPP TSG-RAN WG2 #99, Berlin, Germany, 12 August 2017 See page 1. | 6,14 |
| Y | QUALCOMM INC., "Uplink 7.5 kHz Shift for Subcarrier Alignment between LTE and NR", R4-1709854, 3GPP TSG-RAN WG4 NR#3, Nagoya, JP, 11 September 2017 See pages 1-2. | 7,8,15 |
| A | RAN WG4 TO RAN WG1, WANG, James, "Reply LS on UE RF Bandwidth Adaptation in NR", R1-1704179, 3GPP TSG RAN WG1 Meeting #88bis, Spokane, USA, 27 March 2017 See page 1. | 1-15 |
| A | WO 2017-117340 A1 (IDAC HOLDINGS, INC.) 06 July 2017 See paragraphs [0004]-[0007]; and figure 8. | 1-15 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 DECEMBER 2018 (27.12.2018) | **02 JANUARY 2019 (02.01.2019)** |

| Name and mailing address of the ISA/KR | Authorized officer |
|---|---|
| Korean Intellectual Property Office<br>Government Complex Daejeon Building 4, 189, Cheongsa-ro, Seo-gu, Daejeon, 35208, Republic of Korea | |
| Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2018/011613**

| Patent document cited in search report | Publication date | Patent family member | Publication date |
|---|---|---|---|
| WO 2017-117340 A1 | 06/07/2017 | EP 3398258 A1<br>TW 201735555 A | 07/11/2018<br>01/10/2017 |

Form PCT/ISA/210 (patent family annex) (January 2015)

## REFERENCES CITED IN THE DESCRIPTION

**Non-patent literature cited in the description**

- Evolved Universal Terrestrial Radio Access (E-UTRA); Physical Channels and Modulation (Release 10). *3GPP TS 36.211 V10.4.0,* December 2011